# FASCICULE DE BREVET EUROPEEN

(11) **EP 0 893 043 B1**
(45) Date de publication et mention de la délivrance du brevet: **05.03.2003**
(21) Numéro de dépôt: 98401859.8
(22) Date de dépôt: 21.07.1998
(51) Int. Cl.: A01B 21/08

(54) **Engin de labour comportant plusieurs trains de disques tournant autour d'un même axe**
Pfluggerät mit mehreren um die gleiche Achse drehenden Scheibensätzen
Ploughing apparatus comprising a plurality of disc gangs rotating around the same axis

(30) Priorité: 21.07.1997 FR 9709232
(43) Date de publication de la demande: 27.01.1999
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Tanty, François

(56) Documents cités:
- WO-A-90/13218
- DE-C- 976 328
- DE-U- 29 714 699
- FR-A- 469 733
- FR-A- 2 666 484
- US-A- 1 639 104
- US-A- 2 178 052
- US-A- 2 775 086
- US-A- 3 734 199
- US-A- 4 291 770
- US-A- 5 082 064

## Description

La présente invention a pour objet un nouvel engin de labour à disques du type comportant plusieurs trains de disques qui tournent chacun autour d'un même axe.

On connaît déjà des engins de labour comportant des trains de disques montés sur un même axe qui sont mis en rotation, indépendamment ou solidairement les uns des autres, lorsqu'ils sont déplacés dans le sens du labour en prenant appui sur le sol, en même temps qu'ils déplacent ou retournent la terre.

On connaît notamment par le brevet français REDARES N° 2 666 484 un engin de déchaumage comportant deux rangées parallèles inclinées de disques en forme de calottes sphériques situées à l'avant ainsi qu'une troisième rangée de disques de même forme située à l'arrière de l'engin en étant inclinée dans une direction opposée à celle des deux premières rangées.

Un tel engin permet de hacher et de mélanger le chaume à la terre sur une faible profondeur avec les deux rangées de disques concaves situées à l'avant, tandis que la rangée de disques concaves de plus grand diamètre située à l'arrière assure l'enfouissement du chaume dans le sol.

De par sa structure et sa destination (broyage et enfouissement du chaume) un tel engin ne peut pas être considéré comme un véritable engin de labour qui doit travailler le sol sur une hauteur plus importante, de manière homogène, en évitant la formation d'une surface plane et continue qui délimite la partie superficielle du sol qui est labourée de la partie du sol plus profonde qui ne l'est pas.

De tels engins présentent en général l'inconvénient de créer aux extrémités des rangs de disques des accumulations ou des manques de terre dus au fait que lors du labour, cette dernière est déplacée latéralement par rapport à l'axe de l'engin.

On connaît aussi des engins de labour qui comportent deux trains de disques disposés côte-à-côte mais qui présentent l'inconvénient de mal travailler la terre dans la zone située aux extrémités des deux trains de disques qui sont au voisinage l'une de l'autre.

On connaît également différents types de disques destinés à être montés sur des engins de labour qui ont sensiblement la forme d'une calotte sphérique et dont la périphérie peut présenter une série d'encoches peu profondes, de lobes convexes ou d'encoches profondes qui donnent au disque l'allure d'une hélice multipale.

La présente invention a pour objet un nouvel engin de labour qui, par des moyens simples et efficaces, permet d'éviter ces inconvénients.

Dans sa forme de réalisation la plus simple, la présente invention a pour objet un engin de labour du type comportant à l'avant au moins deux trains de disques dont les axes parallèles entre eux sont inclinés par rapport à une direction perpendiculaire à la direction d'avancement de l'engin de labour, et à l'arrière au moins un train de disques dont l'axe est incliné dans une direction opposée à celle des trains avants, cet engin de labour étant caractérisé par le fait : que les disques des trains avants sont des disques multilobés ; que des disques du ou des trains arrières sont des disques multilobés ou des disques multifleux que les disques d'un même train sont équidistants ; et que les disques d'un train donné sont situés, vus dans la direction d'avancement de l'engin entre les disques du train qui le précède, de manière à passer entre leurs traces.

Conformément à un mode de réalisation préféré de l'invention, les disques d'un train ont un diamètre d'autant plus grand que ce train est précédé sur l'engin de labour par un nombre de trains de disques plus élevé.

Conformément à l'invention, il peut être avantageux de permettre aux trains de disques qui sont à l'avant de reposer librement sur le sol en ayant une liberté de mouvement dans le sens vertical par rapport au bâti de l'engin de labour, alors que le ou les trains de disques situés à l'arrière sont maintenus dans une position fixe par rapport à l'engin de labour, ce qui leur impose une hauteur de travail déterminée par rapport au sol.

Selon l'invention, il est avantageux qu'alors que les disques du groupe de trains qui sont situés à l'avant présentent une forme de calotte sphérique dont les bords sont découpés en forme de lobes légèrement arrondis, les disques du train situé à l'arrière de ce groupe sont constitués par des calottes sphériques qui présentent des échancrures importantes de manière à réaliser des disques à pales ou à fléaux multiples.

Il peut être avantageux de placer un disque de plus grand diamètre à l'extrémité arrière d'un train de disques situé à l'avant et à l'extrémité avant du train de disques situé à l'arrière, ce qui permet d'avoir sur une surface labourée plus plane.

De même, conformément à l'invention, il peut être avantageux de placer à l'extrémité avant d'un train de disques situé à l'avant et à l'extrémité arrière d'un train de disques situé à l'arrière quelques disques de diamètres décroissants pour diminuer l'importance du travail de labour effectué ces extrémités.

Grâce au fait que conformément à l'invention, les disques d'un train de disques sont situés, vus dans le sens de l'avancement entre deux disques du train de disque qui les précède, (un disque effectuant son travail entre les traces de deux disques qui le précèdent), l'invention permet de réaliser un travail homogène sur toute la surface labourée en évitant la formation de sillons tels que ceux qui se forment habituellement avec les engins de labour de ce type actuellement connus.

Ce résultat est encore amélioré si les disques d'un même train sont fixés en hélice sur leur axe commun, chaque disque étant décalé par exemple d'un quart ou d'un huitième de tour par rapport à son voisin.

Selon l'invention, est également préférable que les disques des différents trains n'aient pas le même nombre de lobes ou de fléaux et/ou que leur montage en hélice sur l'axe des différentes paires de trains ne se fasse pas avec le même pas.

On évite ainsi avec une grande efficacité la formation d'une "semelle", c'est-à-dire d'une interface plane séparant la terre labourée de celle qui ne l'est pas, ce qui est essentiel pour maintenir la terre en bon état de culture.

Conformément à l'invention, il peut être avantageux de placer aux extrémités des trains de disques, un nombre limité de disques qui sont plus espacés entre eux que les autres disques du train. Dans ce cas, il est préférable d'espacer ainsi les disques qui se correspondent sur les différents trains, de manière à ce qu'un disque travaille toujours entre les traces de deux disques du train de disques précédent.

Conformément à l'invention, il est également possible de placer dans l'axe de l'engin de labour, en arrière du premier groupe de trains de disques, un disque isolé de plus grand diamètre qui assure un travail du sol complémentaire tout en participant à la stabilité de l'ensemble en compensant les couples qui peuvent avoir tendance à faire pivoter l'engin de labour autour d'un axe vertical.

Dans une variante, il est possible d'utiliser à cette fin, un disque plat agissant comme coutre tournant qui stabilise et maintient l'engin de labour dans sa direction d'avancement ou encore un soc de charrue.

Selon un autre mode de réalisation de l'invention, au lieu de munir l'engin de labour d'une seule pluralité de trains de disques qui sont disposés les uns derrière les autres tel que cela vient d'être décrit, l'engin de labour comporte une double pluralité de tels trains de disques qui sont disposés d'une manière sensiblement symétrique par rapport à l'axe de déplacement de l'engin de labour, de sorte que les trains de disques soient disposés par paires, les paires situées à l'avant de l'engin présentant, vue de dessus, une forme en V ouvert vers l'avant de l'engin, tandis que la ou les paires de disques situées à l'arrière de l'engin présentent, vue de dessus, une forme en V dont la pointe est dirigée vers l'avant de l'engin.

Dans ce mode de réalisation, il est avantageux que les paires de trains de disques disposés en V, que l'on rencontre successivement lorsque l'on se déplace de l'avant vers l'arrière de l'engin de labour, soient alternativement décalées vers la gauche et vers la droite, pour faire en sorte que le sol soit travaillé de manière satisfaisante au voisinage de l'axe de l'engin de labour.

Dans une variante de ce mode de réalisation, les trains de disques d'une même paire de disques sont décalés l'un par rapport à l'autre dans la direction d'avancement de l'engin de labour.

Cette disposition permet en effet d'éviter que la terre qui est située dans l'axe du labour se trouve constamment entre les extrémités centrales des deux trains de disque d'une même paire.

Dans le but de mieux faire comprendre l'invention on va en décrire maintenant à titre d'illustration et sans aucun caractère limitatif plusieurs modes de réalisation pris comme exemples et représentés sur le dessin annexé.

Sur ce dessin,
- la figure 1 représente une vue schématique de dessus, d'un premier mode de réalisation d'un engin de labour selon l'invention qui comporte trois trains de disques disposés l'un derrière l'autre avec un coutre tournant de stabilisation.
- la figure 2 représente une vue schématique de dessus d'une variante du mode de réalisation de la figure 1,
- la figure 3 représente une vue de dessus d'un second mode de réalisation d'un engin de labour selon l'invention qui comporte trois paires de trains de disques disposées symétriquement par rapport à l'axe du labour,
- la figure 4 représente une variante du mode de réalisation de la figure 3,
- les figures 5 et 6 sont des vues en élévation et en coupe d'un disque de labour multilobé utilisable selon l'invention,
- la figure 7 représente une vue en élévation d'un autre disque de labour multipales ou multifléaux utilisable selon l'invention et,
- la figure 8 est une vue schématique en perspective représentant comment les disques peuvent être fixés en hélice sur leur axe.

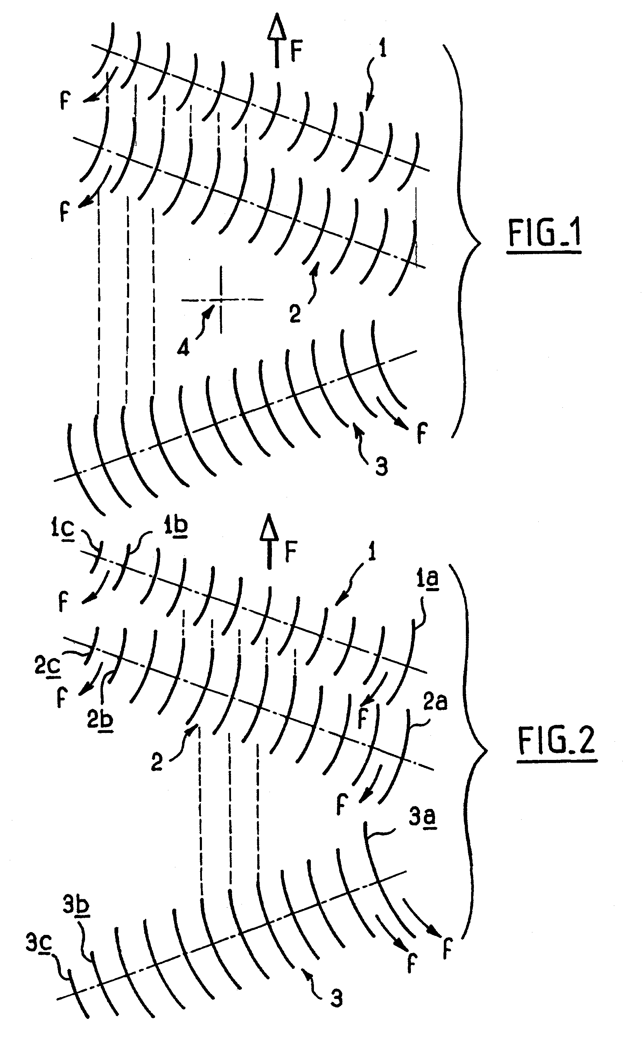

On a représenté sur les figures 1 et 2 un mode de réalisation de l'invention selon lequel on dispose à la partie avant deux trains de disques 1 et 2 qui sont inclinés par rapport à une perpendiculaire à la direction du labour et qui, à la manière connue, travaillent la terre en la déplaçant vers la gauche comme indiqué schématiquement par les flèches f.

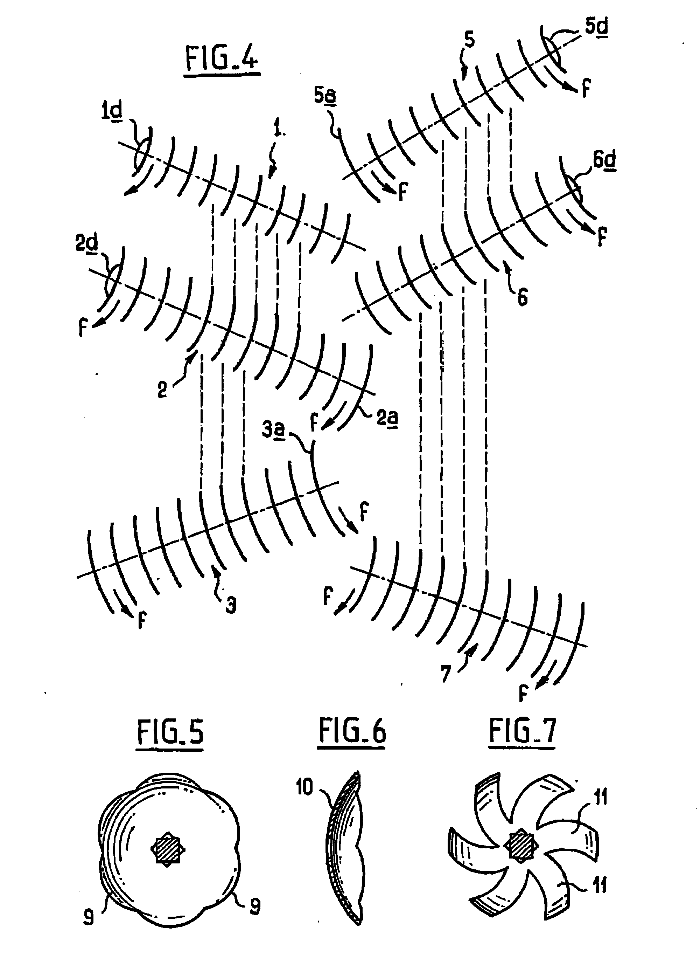

Conformément à l'invention, les disques de ces deux trains sont constitués par des coupelles dont les bords sont découpés pour présenter une série de lobes tels que représentés sur les figures 5 et 6.

Conformément à l'invention, on a placé à l'arrière de ces deux trains de disques un troisième train de disques 3 qui est incliné en sens opposé et qui travaille en déplaçant la terre vers la droite comme indiqué par la flèche f.

Les disques du train 3 peuvent être constitués par des coupelles dont les bords sont découpés pour former des lobes comme représenté sur les figures 5 et 6, mais ils sont de préférence découpés en forme de pales ou des fléaux comme représenté sur la figure 7.

Selon un mode de réalisation préféré de l'invention, tous les disques d'un train sont solidaires en rotation de l'arbre qui les supporte, les disques étant avantageusement décalés l'un par rapport à l'autre de manière à ce que les différents lobes ou pales d'un train soient disposés le long d'une hélice qui s'enroule autour de l'arbre du train de disque, comme on peut le voir sur la figure 8.

Selon un mode de réalisation préféré de l'invention, on utilise pour chaque train des disques dont le diamètre est plus grand que le diamètre des disques du train qui le précède. C'est ainsi que les disques du train 1 sont de diamètre plus petit que celui des disques du train 2 lesquels sont aussi d'un diamètre plus petit que les disques du train 3.

Il est également avantageux que les disques des différents trains n'aient pas le même nombre de lobes ou de fléaux et/ou que le pas des hélices selon lesquelles les disques sont fixés sur leur arbre ne soit pas le même pour les différents trains.

L'inclinaison de l'axe des trains de disques par rapport à la direction du labour est fonction de la profondeur de travail des disques.

Selon un mode de réalisation particulier de l'invention, les trains de disques 1 et 2 sont montés flottants par rapport à l'engin de labour, c'est-à-dire qu'ils reposent sur le sol par leur propre poids sans que leur position en hauteur leur soit imposée par l'engin de labour.

Toutefois pour travailler des sols plats, ces disques peuvent être fixes en hauteur par rapport au châssis qui les supporte.

On peut également selon l'invention, réaliser les trains de disques avant en solidarisant entre eux les axes de plusieurs groupes de disques, chaque groupe pouvant ainsi se déplacer en hauteur indépendamment des autres par rapport au châssis de l'engin de labour.

Les trains de disques avants sont dans ce mode de réalisation formés d'une pluralité de petits groupes de disques indépendants les uns des autres qui peuvent se soulever ou s'abaisser par rapport au châssis.

Au contraire, le train de disques 3 est de préférence maintenu dans une position fixe par rapport à l'engin de labour pour lui permettre de travailler le sol sur une profondeur prédéterminée qui lui est imposée.

Dans le mode de réalisation de la figure 1, on a placé dans l'axe de l'engin de labour un coutre tournant 4 constitué par un disque dont la partie inférieure s'engage dans la terre selon la direction du labour pour compenser les forces qui pourraient avoir tendance à dévier l'ensemble des disques vers la droite ou vers la gauche.

Dans une variante, ce coutre tournant 4 peut être remplacé par un soc.

Dans la variante de la figure 2, on retrouve les trains de disques 1, 2 et 3 disposés de la même manière que sur la figure 1.

A la différence de la figure 1, l'engin de labour de la figure 2 ne comporte pas de coutre tournant 4, mais il possède aux extrémités droites des trains 1, 2 et 3 des disques 1a, 2a, 3a qui ont la même forme que les autres disques de chaque train mais qui ont un diamètre supérieur.

Par contre, comme représenté sur la figure 2, les disques 1b, 1c, et 2b, 2c qui sont situés à l'extrémité avant des deux trains de disques avant 1 et 2 présentent des diamètres décroissants. Il en est de même pour les deux disques 3b, 3c de l'extrémité arrière du train de disque arrière 3.

On évite ainsi de créer une surépaisseur de la terre sur la gauche de la surface labourée.

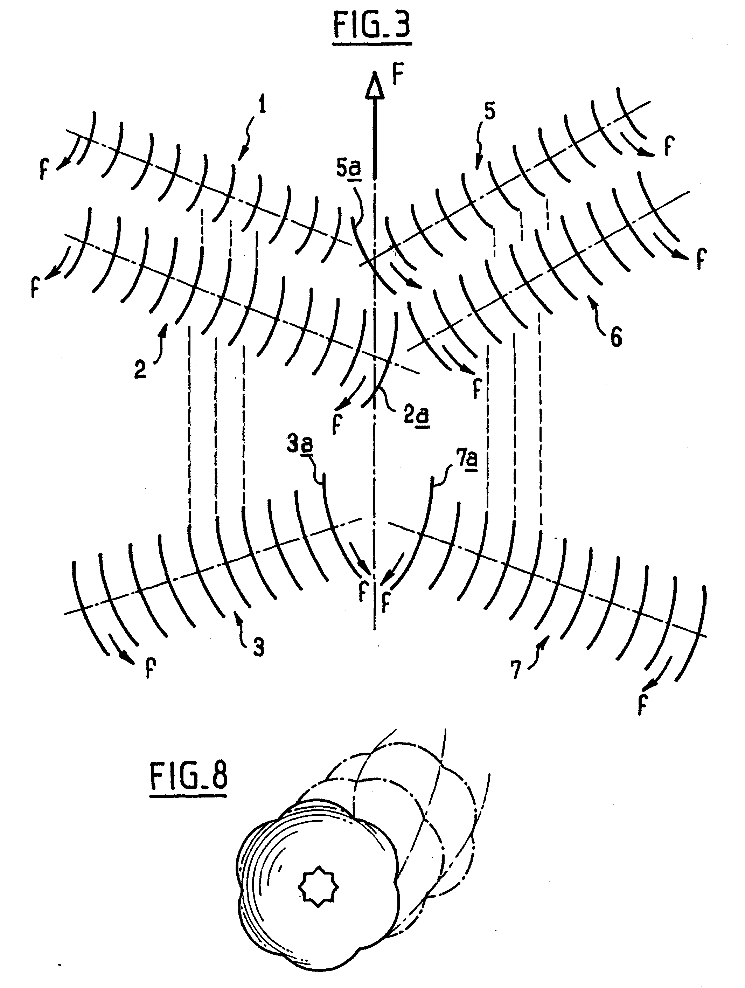

On a représenté sur les figures 3 et 4, un second mode de réalisation de l'invention selon lequel les trains de disques avant et arrière sont disposés par paires, un train de disques 5 étant symétrique du train 1 par rapport à l'axe du labour, un train de disques 6 étant symétrique du train 2 par rapport à l'axe du labour, et un train de disques 7 étant symétrique du train 3 par rapport à l'axe de labour.

Conformément à un mode de réalisation préféré de l'invention, l'extrémité gauche du train de disque 5 situé tout à l'avant est situé à gauche de l'axe F de l'engin de labour, alors que le train du disque 2 qui est situé en seconde position sur la gauche, a son extrémité droite située à droite de l'axe de l'engin de labour.

Dans une variante préférée de ce mode de réalisation, les disques 2a et 5a des trains 2 et 5 qui sont situés au voisinage de l'axe de l'engin de labour présentent un plus grand diamètre que le diamètre des autres disques du même train, et se trouvent décalés l'un par rapport à l'autre pour que leurs actions se recouvrent.

On réalise ainsi un meilleur travail de la terre dans la partie centrale du labour en déplaçant la terre d'abord vers la droite puis vers la gauche, comme représenté par les flèches f et en laissant un sillon central.

Dans ce mode de réalisation préféré, les deux trains de disques 3 et 7, qui sont situés à l'arrière et qui sont inclinés de manière opposée à l'inclinaison des disques 1, 2, 5 et 6 disposés à l'avant, présentent aussi chacun à leur extrémité située au voisinage de l'axe du labour, un disque 3a, ou 7a, de plus grand diamètre, qui a pour effet d'améliorer encore le travail de la partie centrale du labour et de refermer plus efficacement le sillon central qui a été creusé par les trains de disques 1, 2, 5 et 6, situés à l'avant, tandis que l'ensemble des disques des trains 3 et 4 ramènent la totalité de la terre labourée vers le centre du labour comme représenté sur les flèches f.

Comme décrit au sujet de la figure 2, les extrémités avant des trains de disques avant 1, 5 et 2, 6 peuvent être munies de disques dont le diamètre va en décroissant par rapport aux autres disques de ces trains.

Il en est de même pour les disques des extrémités arrière des trains de disques arrière 3 et 7.

Dans la variante du mode de réalisation de la figure 3 qui est représentée sur la figure 4, les trains de disques d'une même paire sont décalés l'un par rapport à l'autre dans la direction du labour.

On a en outre représenté sur la figure 4, comment les disques situés aux extrémités latérales des trains de disques avant 1, 2 et 5, 6 sont munis dans leur concavité de coupelles convexes 1d, 2d, 5d et 6d qui ont pour effet de réduire la capacité de travail de ces disques et d'éviter que se produisent des projections de terre lorsque l'engin de labour travaille à grande vitesse.

On a représenté sur la figure 5 une vue en élévation d'un disque dont le pourtour est découpé en forme de lobes arrondis 9, tandis que l'on a représenté sur la figure 6 sa section 10 en forme de calotte sphérique.

Selon l'invention, de tels disques sont utilisés pour constituer les trains avants.

On a représenté sur la figure 7 un autre modèle de disque également en forme de calotte sphérique mais qui comporte des découpes importantes pour se présenter sous la forme d'un disque comportant une pluralité de pales ou fléaux 11 qui travaillent le sol d'une manière différente des disques présentant des lobes sur leur périphérie.

Conformément à l'invention de tels disques multipales ou multifléaux sont avantageusement utilisés pour les trains arrières de l'engin de labour.

Les disques représentés sur les figures 5, 6 et 7 sont de types connus et ils n'ont été représentés ici que pour mieux faire comprendre les types de disques utilisés selon l'invention.

On a schématiquement représenté sur la figure 8 comment les disques d'un même train sont avantageusement fixés sur leur arbre en étant décalés angulairement, ce qui a pour effet de disposer les lobes ou les fléaux le long de lignes hélicoïdales.

Selon l'invention, les disques qui constituent les mêmes trains de disques situés à l'avant, peuvent avoir par exemple un diamètre de 610mm alors que les disques qui constituent les trains suivants peuvent avoir par exemple un diamètre de 660mm et que les disques des trains arrières peuvent avoir par exemple un diamètre de 760 ou de 810mm.

A titre indicatif, les disques de plus grand diamètre qui sont situés aux extrémités des trains de disques, peuvent avoir un diamètre qui est par exemple de 10 à 15% supérieur au diamètre des disques courants du train considéré.

Il est bien entendu que les modes de réalisation qui ont été représentés sur le dessin, ne sont donnés qu'à titre d'illustration et sans aucun caractère limitatif du caractère de l'invention.

De même l'engin de labour selon l'invention peut comporter à l'avant plus de deux trains ou paires de trains de disques disposés l'un derrière l'autre.

## Revendications

1. Engin de labour du type comportant à l'avant au moins deux trains de disques (1, 2) dont les axes parallèles entre eux sont inclinés par rapport à une direction perpendiculaire à la direction (F) d'avancement de l'engin de labour, et à l'arrière au moins un train de disques dont l'axe est incliné dans une direction opposée à celle des trains avants (1, 2), cet engin de labour étant **caractérisé par le fait : que** les disques (3) des trains avants sont des disques multilobés ; que des disques du ou des trains arrières sont des disques multilobés ou des disques multifléaux (fig. 7) ; que les disques d'un même train sont équidistants ; et que les disques d'un train donné sont situés, vus dans la direction d'avancement de l'engin entre les disques du train qui le précède de manière à passer entre leurs traces.

2. Engin de labour selon la revendication 1, **caractérisé par le fait que** le diamètre des disques d'un train de labour (2, 3) est supérieur au diamètre des disques d'un train de labour (1, 2) qui est situé devant lui dans le sens du déplacement (F) de l'engin de labour.

3. Engin de labour selon l'une quelconque des revendications précédentes, **caractérisé par le fait qu'**au moins un train de disques situé à l'avant (1, 2) repose librement sur le sol.

4. Engin de labour selon l'une des revendications 1 et 2, **caractérisé par le fait que** les deux trains de disques situés à l'avant (1, 2) sont maintenus en position fixe en hauteur par rapport au châssis.

5. Engin de labour selon l'une quelconque des revendications précédentes, **caractérisé par le fait que** le train de disques (3) situé à l'arrière est maintenu en position fixe par rapport à l'engin de labour.

6. Engin de labour selon l'une quelconque des revendications 1 à 5, **caractérisé par le fait qu'**au moins un train de disques comporte une pluralité de groupes de disques solidarisés entre eux, au moins un groupe étant mobile en hauteur par rapport à l'engin de labour et aux autres groupes.

7. Engin de labour selon l'une quelconque des revendications précédentes, **caractérisé par le fait qu'**il comporte deux ensembles de trains de disques (1, 2, 3 ; 4, 5, 6) disposés de manière sensiblement symétrique par rapport à l'axe (F) de l'engin de labour.

8. Engin de labour selon la revendication 7, **caractérisé par le fait que** l'extrémité centrale d'un train de disques se situe alternativement de part et d'autre de l'axe du labour lorsque l'on se déplace d'avant en arrière sur l'axe du labour.

9. Engin de labour selon l'une quelconque des revendications 7 et 8, **caractérisé par le fait que** les deux trains d'une même paire (1, 5 ; 2, 6 ; 3, 7) sont décalés l'un par rapport à l'autre dans la direction d'avancement de l'engin de labour.

10. Engin de labour selon l'une quelconque des revendications précédentes, **caractérisé par le fait qu'**au moins certains trains de disques possèdent à l'une de leurs extrémités un disque (5a ; 2a ; 7a) de plus grand diamètre que les autres disques du même train.

11. Engin de labour selon la revendication 10, **caractérisé par le fait que** les extrémités centrales des deux trains de disques arrières (3 ; 7) comportent chacune un disque de plus grand diamètre (3a ; 7a).

12. Engin de labour selon la revendication 11, **caractérisé par le fait que** les extrémités centrales qui portent un disque de plus grand diamètre se trouvent situées alternativement au-delà de l'axe (F) de l'engin lorsque l'on se déplace de l'avant vers l'arrière.

13. Engin de labour selon l'une quelconque des revendications précédentes, **caractérisé par le fait qu'**au moins une extrémité d'au moins un train de disques comporte un disque de plus petit diamètre (1c 2c, 3c).

14. Engin de labour selon l'une quelconque des revendications précédentes, **caractérisé par le fait que** les extrémités avant des trains de disques avant (1, 5, 2, 6) comportent des disques de diamètre décroissant.

15. Engin de labour selon l'une quelconque des revendications précédentes, **caractérisé par le fait que** l'extrémité arrière des trains de disques arrière (3 ; 7) comporte des disques de diamètre décroissant.

16. Engin de labour selon l'une quelconque des revendications précédentes, **caractérisé par le fait que** les disques d'extrémités des trains de disques comportent dans leur concavité une coupole convexe (1d, 2d, 5d, 6d).

17. Engin de labour selon l'une quelconque des revendications précédentes, **caractérisé par le fait que** les disques de chaque train sont montés sur leur arbre en étant décalés angulairement les uns par rapport aux autres pour placer les lobes (19) ou les fléaux (11) selon des hélices.

18. Engin de labour selon la revendication 17, **caractérisé par le fait que** les hélices des différents trains de disques ont des pas différents.

19. Engin de labour selon l'une quelconque des revendications précédentes, **caractérisé par le fait que** les disques des différents trains ont des nombres différents de lobes ou de fléaux.

20. Engin de labour selon l'une quelconque des revendications précédentes, **caractérisé par le fait qu'**il comporte un dispositif de stabilisation contre les déplacements latéraux tel qu'un coutre tournant (4) ou un soc.

21. Engin de labour selon l'une quelconque des revendications précédentes, **caractérisé par le fait que** le diamètre des disques d'au moins un train avant (1 ; 5 ; 2 ; 6) est égal à 610 mm.

22. Engin de labour selon l'une quelconque des revendications précédentes, **caractérisé par le fait que** le diamètre des disques du train arrière (37) est égal à 810 mm.

## Patentansprüche

1. Pflug mit wenigstens zwei vom angebrachten Scheibensätzen (1, 2) deren zueinander parallele Achsen in Bezug auf eine zur Fortbewegungsrichtung (F) des Pfluges senkrechte Richtung geneigt sind, und mit wenigstens einem hinten angebrachten Scheibensätz, dessen Achse in eine Richtung entgegengesetzt zu derjenigen der vorderen Scheibensätze (1,2) geneigt ist, **dadurch gekennzeichnet, daß** die Scheiben (3) der vorderen Scheibensätze gelappte Scheiben sind, daß die Scheiben des oder der hinteren Scheibensätze gelappte Scheiben oder Flügelscheiben (Figur 7) sind, daß die Scheiben desselben Scheibensatzes äquidistant sind und daß die Scheiben eines gegebenen Scheibensatzes in Fortbewegungsrichtung des Pfluges gesehen so zwischen den Scheiben des voraugehenden Scheibensätzes angeordnet sind, daß sie zwischen deren Spuren laufen.

2. Pflug nach Anspruch 1, **dadurch gekennzeichnet, daß** der Durchmesser der Scheiben eines Pflugscharsatzes (2, 3) größer ist als der Durchmesser der Scheiben eines Pflugscharsatzes (1, 2), der sich in Fortbewegungsrichtung (F) des Pfluges vor ihm befindet.

3. Pflug nach einem der vorstehenden Ansprüche, **dadurch gekennzeichnet, daß** wenigstens ein vom befindlicher Scheibensatz (1, 2) frei auf dem Boden aufliegt.

4. Pflug nach einem der Ansprüche 1 und 2, **dadurch gekennzeichnet, daß** die vorderen Scheibensätze (1, 2) in Bezug auf das Fahrgestell in einer festen Höhe gehalten sind.

5. Pflug nach einem der vorstehenden Ansprüche, **dadurch gekennzeichnet, daß** der hinten angeordnete Scheibensatz (3) in Bezug auf den Pflug in einer festen Höhe gehalten ist.

6. Pflug nach einem der Ansprüche 1 bis 5, **dadurch gekennzeichnet, daß** wenigstens ein Scheibensatz mehrere Gruppen von miteinander verbundenen Scheiben aufweist und wenigstens eine Gruppe in Bezug auf den Pflug und die übrigen Gruppen in der Höhe variabel ist.

7. Pflug nach einem der vorstehenden Ansprüche, **dadurch gekennzeichnet, daß** er zwei Gruppen von Scheibensätzen (1, 2, 3; 4, 5, 6) aufweist, die im wesentlichen symmetrisch in Bezug auf die Achse (F) des Pfluges angeordnet sind.

8. Pflug nach Anspruch 7, **dadurch gekennzeichnet, daß** das innere Ende eines Scheibensatzes sich abwechselnd auf beiden Seiten der Achse des Pfluges befindet, wenn man sich auf der Achse des Pfluges von vorn nach hinten bewegt.

9. Pflug nach einem der Ansprüche 7 und 8, **dadurch gekennzeichnet, daß** die beiden Scheibensätze ein und desselben Paares (1, 5; 2, 6; 3, 7) in Fortbewegungsrichtung des Pfluges gegeneinander versetzt sind.

10. Pflug nach einem der vorstehenden Ansprüche, **dadurch gekennzeichnet, daß** zumindest einige Scheibensätze an ihren Enden eine Scheibe (5a; 2a; 7a) aufweisen, deren Durchmesser größer ist als der der übrigen Scheiben desselben Satzes.

11. Pflug nach Anspruch 10, **dadurch gekennzeichnet, daß** die inneren Enden der beiden hinteren Scheibensätze (3; 7) jeweils eine Scheibe (3a; 7a) mit größerem Durchmesser aufweisen.

12. Pflug nach Anspruch 11, **dadurch gekennzeichnet, daß** die inneren Enden, die eine Scheibe mit größerem Durchmesser tragen, sich abwechselnd jenseits der Achse (F) des Pfluges befinden, wenn man sich von vorn nach hinten bewegt.

13. Pflug nach einem der vorstehenden Ansprüche, **dadurch gekennzeichnet, daß** wenigstens ein Ende wenigstens eines Scheibensatzes eine Scheibe (1c, 2c, 3c) mit kleinerem Durchmesser trägt.

14. Pflug nach einem der vorstehenden Ansprüche, **dadurch gekennzeichnet, daß** die vorderen Enden der vorderen Scheibensätze (1, 5, 2, 6) Scheiben mit abnehmendem Durchmesser aufweisen.

15. Pflug nach einem der vorstehenden Ansprüche, **dadurch gekennzeichnet, daß** das hintere Ende der hinteren Scheibensätze (3; 7) Scheiben mit abnehmendem Durchmesser aufweist.

16. Pflug nach einem der vorstehenden Ansprüche, **dadurch gekennzeichnet, daß** die Scheiben an den Enden der Scheibensätze in ihrer Höhlung eine konvexe Kuppel (1d, 2d, 5d, 6d) aufweisen.

17. Pflug nach einem der vorstehenden Ansprüche, **dadurch gekennzeichnet, daß** die Scheiben jedes Satzes auf ihrer Welle derart winkelversetzt in Bezug aufeinander montiert sind, daß ihre Lappen (19) oder Flügel (11) schraubenförmig angeordnet sind.

18. Pflug nach Anspruch 17, **dadurch gekennzeichnet, daß** die Schrauben der verschiedenen Scheibensätze unterschiedliche Ganghöhen aufweisen.

19. Pflug nach einem der vorstehenden Ansprüche, **dadurch gekennzeichnet, daß** die Scheiben der verschiedenen Sätze unterschiedliche Anzahlen von Lappen oder Flügeln haben.

20. Pflug nach einem der vorstehenden Ansprüche, **dadurch gekennzeichnet, daß** er eine Einrichtung zur Stabilisierung gegen seitliche Bewegungen aufweist, wie etwa einen rotierenden Vorschneider (4) oder eine Pflugschar.

21. Pflug nach einem der vorstehenden Ansprüche, **dadurch gekennzeichnet, daß** der Durchmesser der Scheiben wenigstens eines vorderen Satzes (1; 5; 2; 6) gleich 610 mm ist.

22. Pflug nach einem der vorstehenden Ansprüche, **dadurch gekennzeichnet, daß** der Durchmesser der Scheiben des hinteren Satzes (37) gleich 810 mm ist.

## Claims

1. Ploughing apparatus of the type comprising, at the front, at least two gangs of discs (1, 2) the mutually parallel axes of which are inclined with respect to a direction perpendicular to the direction (F) of forward travel of the ploughing apparatus and, at the rear, at least one gang of discs the axis of which is inclined in the opposite direction to that of the front gangs (1, 2), this ploughing apparatus being **characterized in that**: the discs (3) of the front gangs are multi-lobed discs; discs of the rear gang(s) are multi-lobed discs or multi-flail discs (Fig. 7); the discs of one and the same gang are equidistant; and the discs of a given gang are situated, viewed in the direction of forward travel of the apparatus, between the discs of the gang preceding it so as to run between their lines.

2. Ploughing apparatus according to Claim 1, **characterized in that** the diameter of the discs of one ploughing gang (2, 3) is greater than the diameter of the discs of a ploughing gang (1, 2) situated in front of it in the direction of travel (F) of the ploughing apparatus.

3. Ploughing apparatus according to any one of the preceding claims, **characterized in that** at least one gang of discs situated at the front (1, 2) rests freely on the ground.

4. Ploughing apparatus according to either of Claims 1 and 2, **characterized in that** the two gangs of discs situated at the front (1, 2) are held in a position which is fixed in terms of height with respect to the chassis.

5. Ploughing apparatus according to any one of the preceding claims, **characterized in that** the gang of discs (3) situated at the rear is held in a position which is fixed with respect to the ploughing apparatus.

6. Ploughing apparatus according to any one of Claims 1 to 5, **characterized in that** at least one gang of discs comprises a number of groups of discs secured together, at least one group being able to move heightwise with respect to the ploughing apparatus and with respect to the other groups.

7. Ploughing apparatus according to any one of the preceding claims, **characterized in that** it comprises two sets of gangs of discs (1, 2, 3; 4, 5, 6) arranged more or less symmetrically with respect to the axis (F) of the ploughing apparatus.

8. Ploughing apparatus according to Claim 7, **characterized in that** the central end of one gang of discs is situated alternately on each side of the axis of the plough when progressing from front to rear along the axis of the plough.

9. Ploughing apparatus according to either one of Claims 7 and 8, **characterized in that** the two gangs of a same pair (1, 5; 2, 6; 3, 7) are offset from one another in the direction of forward travel of the ploughing apparatus.

10. Ploughing apparatus according to any one of the preceding claims, **characterized in that** at least certain gangs of discs have, at one of their ends, a disc (5a; 2a; 7a) of a larger diameter than the other discs of the same gang.

11. Ploughing apparatus according to Claim 10, **characterized in that** the central ends of the two rear gangs of discs (3; 7) each comprise a larger-diameter disc (3a; 7a).

12. Ploughing apparatus according to Claim 11, **characterized in that** the central ends which carry a larger-diameter disc are situated alternately beyond the axis (F) of the apparatus when progressing from front to rear.

13. Ploughing apparatus according to any one of the preceding claims, **characterized in that** at least one end of at least one gang of discs comprises a smaller-diameter disc (1c, 2c, 3c).

14. Ploughing apparatus according to any one of the preceding claims, **characterized in that** the front ends of the front gangs of discs (1, 5, 2, 6) have discs of decreasing diameter.

15. Ploughing apparatus according to any one of the preceding claims, **characterized in that** the rear end of the rear gangs of discs (3; 7) has discs of decreasing diameter.

16. Ploughing apparatus according to any one of the preceding claims, **characterized in that** the end discs of the gangs of discs have, in their concavity, a convex cup (1d, 2d, 5d, 6d).

17. Ploughing apparatus according to any one of the preceding claims, **characterized in that** the discs of each gang are mounted on their shaft with an angular offset from one another so as to place the lobes (19) or the flails (11) in a helical pattern.

18. Ploughing apparatus according to Claim 17, **characterized in that** the helices of the various gangs of discs have different pitches.

19. Ploughing apparatus according to any one of the preceding claims, **characterized in that** the discs of the various gangs have different numbers of lobes or flails.

20. Ploughing apparatus according to any one of the preceding claims, **characterized in that** it comprises a device providing stabilization against lateral displacement such as a rotary coulter (4) or a ploughshare.

21. Ploughing apparatus according to any one of the preceding claims, **characterized in that** the diameter of the discs of at least one front gang (1; 5; 2; 6) is equal to 610 mm.

22. Ploughing apparatus according to any one of the preceding claims, **characterized in that** the diameter of the discs of the rear gang (37) is equal to 810 mm.
